# EUROPEAN PATENT SPECIFICATION

(11) **EP 3 108 739 B1**
(45) Date of publication and mention of the grant of the patent: **04.08.2021**
(21) Application number: 16174249.9
(22) Date of filing: 13.06.2016
(51) Int. Cl.: A01D 45/02

(54) **HARVESTING HEAD FOR CORN COBS**
ERNTEVORSATZ FÜR MAISKOLBEN
TÊTE DE RÊCOLTE POUR EPI DE MAÏS

(30) Priority: 25.06.2015 IT UB20151667
(43) Date of publication of application: 28.12.2016
(73) Proprietor: Dominoni, Massimo, 26010 Camisano (Cremona) (IT)
(72) Inventor: Dominoni, Massimo, 26010 Camisano (Cremona) (IT)
(74) Representative: Lunati & Mazzoni S.r.L.

(56) References cited:
- EP-A1- 0 653 152
- EP-A1- 2 335 470
- EP-A1- 2 335 472
- EP-A1- 2 415 342
- US-A- 5 330 114
- None

## Description

The present invention relates to a harvesting head for corn cobs of the type described in the preamble of the first claim.

Similar devices are described in the patent applications: EP-A-2335472, EP-A-2415342, EP-A-2335470, US-A-5330114, EP-A-0653152.

There are known heads for harvesting corn, suitable to be attached to a combine harvester to provide a machine for harvesting corn.

As known, the corn plants from which the cobs and thus the corn are harvested are planted and grown in parallel rows, preferably 70-80 cm apart, though recently it has become customary to plant rows of corn plants 50 cm apart.

Starting from the forwardmost part of the machine, considering the normal direction of travel in a straight line, the harvesting heads for corn cobs comprise a series of row separator tips, suitable to convey corn plants along predetermined lines.

Hence they comprise cob harvesting groups. Each group comprises, from bottom to top: squeezing rollers, de-cobbing plates and harvesting conveyors. This group is repeated and is aligned in a direction perpendicular to the direction of advancement and flanked by other groups. Two adjacent groups are also surmounted on both sides with grooves, which in turn are aligned in the direction of advancement to said row separator tips and positioned behind them. Each harvesting group also establishes a collection channel, appropriately lining up, in use, with the rows of plants and enclosed between the squeezing rollers and plates. In greater detail, the grooves are vertically convex structures, aligned and almost in continuity with the tips suitable to convey the cobs toward the collecting channels.

The harvesting conveyors transport the corn plants and cobs toward a feed auger.

The squeezing rollers drag the plants downwards, so that the cobs are separated by contact with the de-cobbing plates and transported by the harvesting conveyors. The heads then comprise stubble cutters, positioned beneath the squeezing rollers. The stubble cutters comprise rotating blades suitable to cut or chop the plants from which the cobs have been separated.

Downstream of the harvesting groups a feed auger is preferably present, suitable to transport the produce to the combine harvester intake.

The prior art described above has some important drawbacks.

In particular, said groups are complex and costly.

For example, the stubble cutters are each equipped with a coupling joint and must be subjected to periodic overhaul.

In these circumstances, the technical task underlying the present invention is to devise a harvesting head for corn cobs capable of substantially remedying said drawbacks.

Within the scope of said technical task an important objective of the invention is to achieve a harvesting head for corn cobs that is simple and economical.

Another important objective of the invention is to deliver a harvesting head for corn cobs that is easy to maintain.

The technical task and the objectives specified are achieved by a harvesting head for corn cobs as claimed in the appended claim 1.

Preferred embodiments are described in the dependent claims.

The characteristics and advantages of the invention will be clarified in the following detailed descriptions of some preferred embodiments of the invention, with reference to the accompanying drawings, in which:

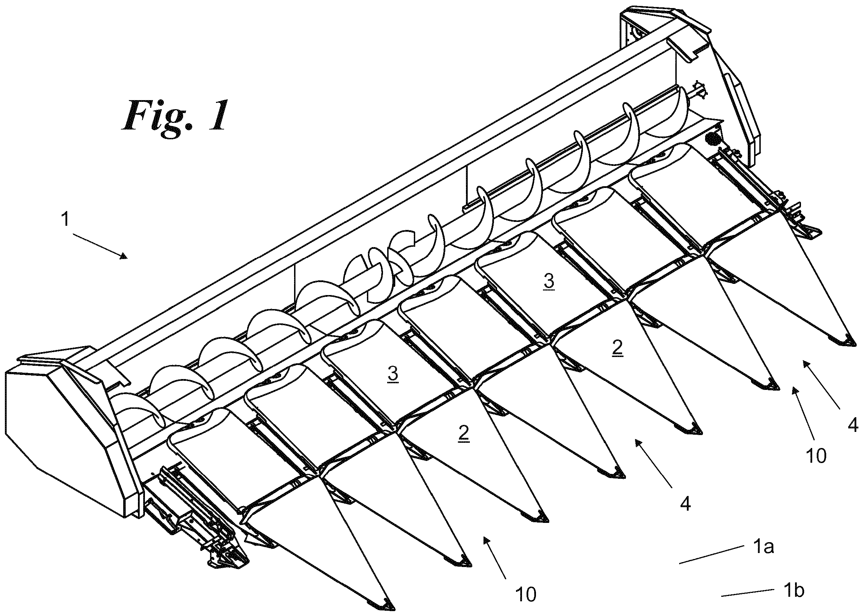

- **Fig. 1** shows an axonometric view of the harvesting head according to the invention;

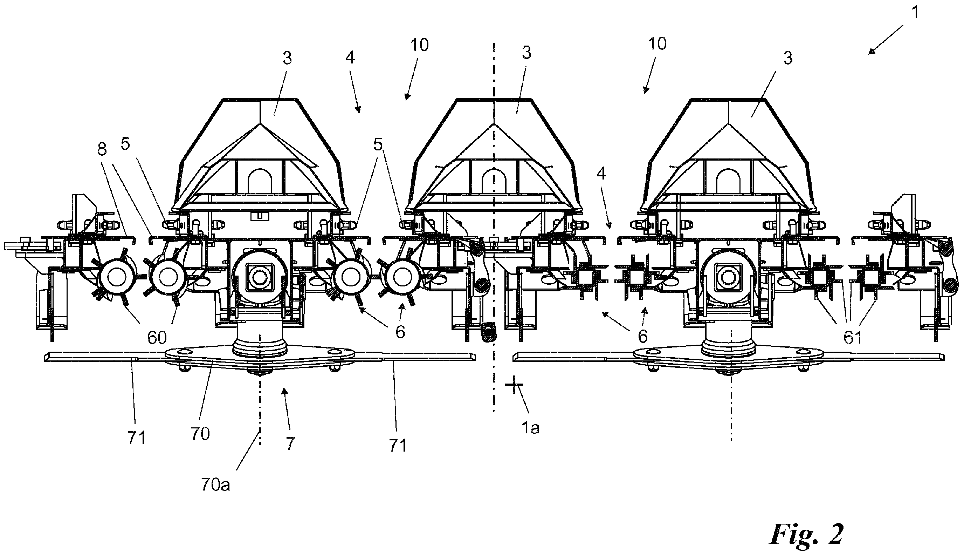

- **Fig. 2** illustrates a sectional view from behind the harvesting head according to the invention and shows two different examples to the left and to the right of the dashed and dotted line;

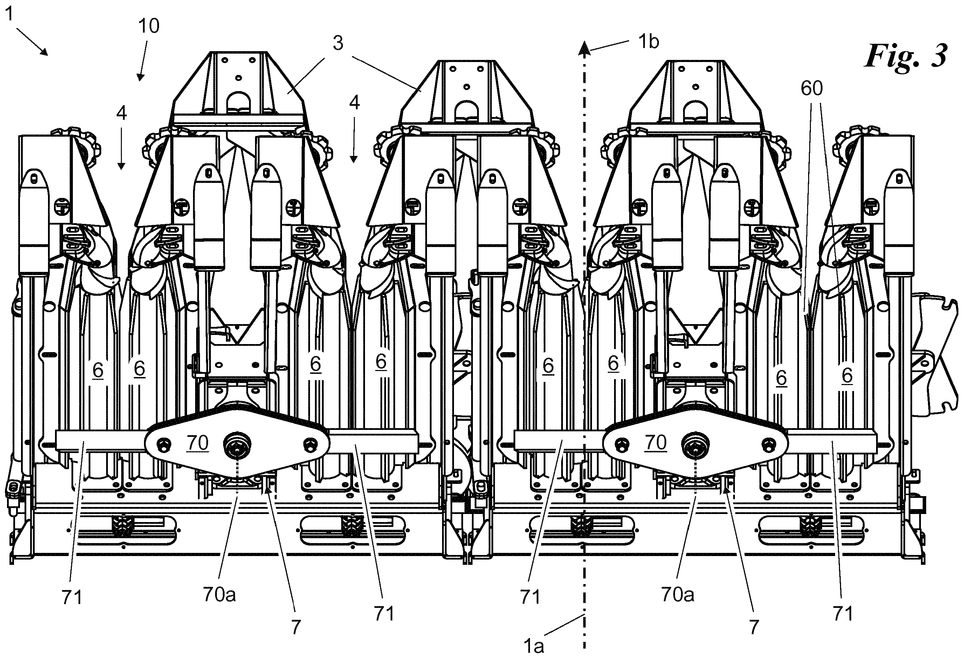

- **Fig. 3** is an axonometric view of the bottom of the harvesting head according to the invention; and

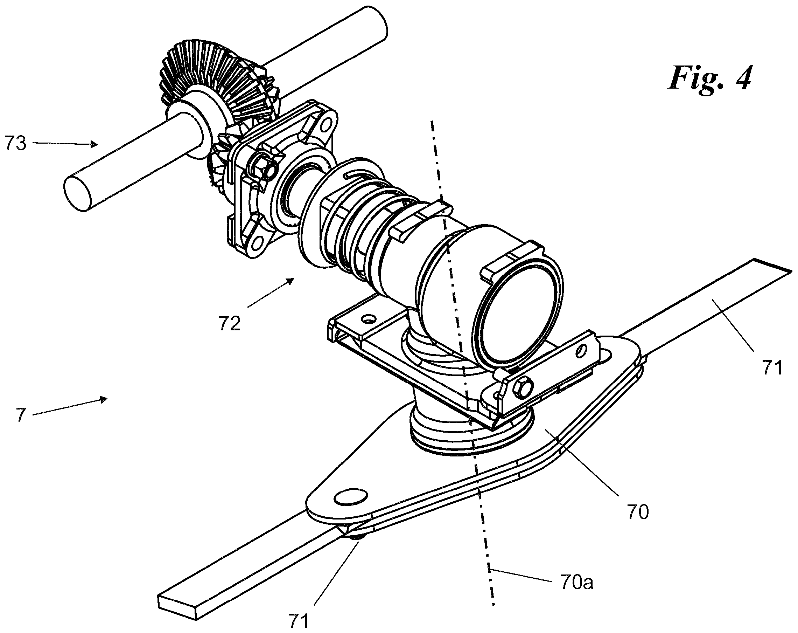

- **Fig. 4** shows in axonometric view a portion of the harvesting head according to the invention.

With reference to the figures, the harvesting head for corn cobs according to the invention is indicated overall with the number **1.**

It is suitable to be securely and detachably attached to a combine harvester, complete with wheels, motor and control station, to provide an agricultural machine for harvesting corn. Said machines are suitable to collect the corn cobs, separating them from the plants, preferably grown in rows which are preferably spaced between 4 dm and 8 dm and more preferably close to 5 dm apart. In addition, said machines preferably cut, and also preferably chop up the stalks of said corn plants.

The harvesting head for corn cobs 1 is suitable to harvest corn along a direction of advancement **1a**, and in a sense of advancement **1b,** i.e. the direction in which the agricultural machine normally advances when it is in a straight line.

It comprises, in the forwardmost portion of the head 1, given the direction of motion in the direction 1a, known row separator tips **2**, suitable to convey the corn plants along the collection channels **4.** These latter extend substantially in a direction parallel to the direction of advancement 1a and are suitable to provide a housing area for the corn plants, when still uncut.

The head 1 further comprises a groove **3** connected to the row separator tip 2 and establishing, with the adjoining groove 3, collection channels 4. The grooves 3 are known. They have a preferably convex upwards shape, so as to convey the corn cobs into the appropriate collection channels 4.

The harvesting head 1 comprises a plurality, usually between 4 and 20, harvesting groups **10** mutually similar, parallel and mainly extending in said direction of advancement.

They define, inside them, said collection channels 4. The collection channels 4 extend, in fact, inside the groups 10. Adjacent collection channels 4 are preferably spaced apart by between 4 dm and 8 dm, more preferably by between 4 dm and 6 dm, and still more preferably close to 5 dm.

Each harvesting group 10 comprises, in addition, harvesting conveyors 5 suitable to transport the corn plants and corn cobs along the collection channels 4 and in the direction of advancement (1a) and in an opposite sense to said sense of advancement (1b). The harvesting conveyors 5 are also known.

Each harvesting group 10 also comprises known de-cobbing plates **8** suitable to separate the cob from the stem when in contact with the plates 8, as described hereinafter. In particular, the de-cobbing plates 8 are arranged side by side and create a gap of about 4 cm that faces the collection channels 4, so as to trap the cobs dragged therein and not the stem or stalk.

Each harvesting group 10 also comprises two squeezing rollers **6** side by side and at a much reduced distance. These are suitable to drag the corn plants positioned in the collection channels 4 downwards, so that the cobs are torn upon contact with the de-cobbing plates 8 and transported by the harvesting conveyor 5. The squeezing rollers 6 consist of cylindrical elements extending predominantly in the direction of advancement 1a and rotatable along axes parallel to said direction of advancement 1a. They are preferably equipped with radial fins **60** and other characteristics described below.

The adjacent harvesting groups 10 are in addition surmounted by grooves 3 and connected to the row separator tips 2.

The head 1 further comprises stubble cutter units **7** suitable to cut the corn plants when placed in the collection channels 4.

Each stubble cutter unit 7 comprises a hub **70** rotatable along an axis of rotation **70a** not parallel to the horizontal plane, and preferably close to vertical, in particular inclined by an angle of between 3° and 20° with respect to the vertical direction. Said hub 70 is arranged in a harvesting group 10, preferably under one of the grooves 3.

Each stubble cutter unit 7 also comprises a number of rotating blades **71,** at least one, and preferably between 2 and 4, and more preferably two. The rotating blades 71 are perpendicular to the axis of rotation 70a.

Innovatively, the rotating blades 71 are suitable to cut, and in cutting use, the corn plants are arranged in both collection channels 4 mutually adjacent and contiguous to the harvesting group 10, on which the hub 70 of the same blade is placed.

Consequently, a stubble cutter unit 7 is suitably arranged for every two harvesting groups 10.

In addition, the rotating blades 70 are each between 3 dm and 6 dm and more preferably 4 dm in length from the axis of rotation 70a.

In order to improve the cutting of the rotating blades 71, in particular where they have an opposite direction of motion coinciding with the sense of advancement 1b, the squeezing rollers 6 preferably comprise retention means **61,** suitable to hold the corn plants so as to facilitate and to allow said cutting.

The retaining means 61 preferably consist of non-parallel grooves, preferably perpendicular to the direction of advancement 1a, or consist of fins suitable to trap the corn plants.

Each stubble cutter unit 7 also comprises a known disconnectable coupling joint **72,** preferably connected to a handling system **73,** common to all the stubble cutter units 7.

Finally, downstream of the harvesting groups 10 a feed auger is preferably present, suitable to transport the produce to the combine harvester intake.

Operation of the harvesting head for corn cobs 1 previously described in structural terms is as follows.

The harvesting head for corn cobs 1, and the machine that includes it, are positioned on the field preferably aligning the collection channels 4 with rows of corn plants.

The advancing machine correctly channels said plants through the row separating tips 2, dragging down plants arranged therein through the squeezing rollers 6.

At the same time, the stubble cutter units 7 cut the stalks of said plants. In particular, each stubble cutter unit 7 cuts the plants of two adjacent collection channels 4.

The cobs thus arrive in contact with the plates and are separated here from the rest of the plant as a result of the impact or the contact itself.

These corn cobs are conveyed by the harvesting conveyors 5 to the feed auger, suitable for transporting the produce to the combine harvester intake.

The harvesting head for corn cobs 1 according to the invention achieves significant advantages.

Since said head 1 comprises a smaller number of stubble cutter units 7 it is consequently simpler, inexpensive and quickly maintainable.

The stubble cutter units 7 are actually the most complex part of the head 1, since they also comprise the coupling joint 72 and complex handling gear.

In addition, the large diameter of the rotating blades 71 allows a better cutting of the plants themselves, in particular when combined with the retaining means 61 on the squeezing rollers 6.

The invention is subject to variations falling within the scope of the inventive concept as defined by the claims. In this context all the details are replaceable by equivalent elements and the materials, shapes and dimensions can be any.

## Claims

1. Harvesting head (1) for cobs of corn suitable for reaping corn plants in a direction of advancement (1a) and in a sense of advancement (1b) and comprising:
- row separator tips (2), suitable to convey said corn plants along collection channels (4), extending substantially in a direction parallel to said direction of advancement (1a),
- grooves (3) connected to said row separator tips (2) and defining said collection channels (4) suitable to realise a housing area of said corn plants, when still not cut,
- a plurality of harvesting groups (10), side by side, aligned and extending mainly in said direction of advancement (1a), each of the harvesting groups (10) comprising:
- harvesting conveyors (5) suitable to transport said corn plants and said cobs into said collection channels (4) in said direction of advancement (1a) and in an opposite direction to said sense of advancement (1b),
- de-cobbing plates (8) suitable to separate said cobs from the stem defining a gap along one of said collection channels (4),
- two squeezing rollers (6), facing said collection channel (4), suitable to drag said corn plants positioned in said collection channels (4) downwards, so that said cobs are torn upon contact with said de-cobbing plates (8) and transported by said harvesting conveyor (5),
- said facing harvesting groups (10) being surmounted by said grooves (3) and connected to said row separator tips (2),
- said harvesting head (1) further comprising stubble cutter groups (7) suitable to cut said corn plants when placed in said collection channels (4),
- each of said stubble cutter groups (7) comprising:
- a hub (70), rotatable along an axis of rotation (70a) not parallel to the horizontal plane arranged under one of said grooves (3),
- at least one rotating blade (71), connected to said hub (70) and suitable to cut said corn plants, positioned in two of said adjacent channels (4) because of its length,
- and said harvesting head (1) being **characterised in that**
- two adjacent of said stubble cutter groups (7) are arranged under two respective said grooves (3) which are not reciprocally adjacent so that all said rotating blades (71) may lie on the same plane.

2. Harvesting head (1) according to the previous claim, in which one of said stubble cutter groups (7) is present for every two harvesting groups (10).

3. Harvesting head (1) according to claim 1 or 2, wherein there are two of said rotating blades present (61) for each hub (70).

4. Harvesting head (1) according to one or more of the previous claims, wherein said rotating blades (71) each have a length, starting from the rotation axis (70a) between 3 dm and 6 dm.

5. Harvesting head (1) according to the previous claim, wherein said rotating blades (71) each have a length, starting from the rotation axis (70a) of 4 dm.

6. Harvesting head (1) according to one or more of the previous claims, wherein said squeezing rollers (6) comprise retention means (61), suitable to hold the corn plants so as to permit the cutting thereof even when said rotating blades (71) have a direction of movement coinciding with said direction of advancement.

7. Harvesting head (1) according to the previous claim, wherein said retention means (61) are grooves non-parallel to said direction of advancement (1a).

8. Harvesting head (1) according to the previous claim, wherein said retention means (61) are fins extending in a radial direction and suitable to restrain and not cut the corn plants.

9. Harvesting head (1) according to the previous claim, wherein each of said stubble cutter groups (7) comprises a coupling joint (72).

10. A combine harvester comprising a thresher and a harvesting head (1) according to one or more of the preceding claims.

## Patentansprüche

1. Erntevorsatz (1) für Maiskolben, geeignet zum Ernten von Maispflanzen entlang einer Fahrtrichtung (1a) und entlang einer Fahrtrichtung (1b) und umfassend:
- Reihentrenner-Spitzen (2), die geeignet sind, die genannten Maispflanzen entlang von Erntekanälen (4) zu sammeln und im Wesentlichen in zu der genannten Fahrtrichtung (1a) parallel verlaufen,
- Hauben (3), die mit den genannten Reihentrenner-Spitzen (2) verbunden sind und die genannten Erntekanäle (4) definieren, die geeignet sind, einen Aufnahmebereich der genannten Maispflanzen zu bilden, wenn diese noch nicht geschnitten sind,
- eine Vielzahl von Erntegruppen (10), die nebeneinanderliegend gefluchtet sind und vorrangig in der genannten Fahrtrichtung (1a) verlaufen, wobei jede der genannten Erntegruppen (10) Folgendes umfasst:
- Ernteketten (5), die geeignet sind, die genannten Maispflanzen und die genannten Kolben in der genannten Fahrtrichtung (1a) und in einer der genannten Fahrtrichtung entgegengesetzten Richtung (1b) in den genannten Erntekanälen (4) zu befördern,
- Pflückplatten (8), die geeignet sind, die genannten Maiskolben vom Stiel zu trennen und die einen Spalt entlang einer der genannten Erntekanäle (4) definieren,
- zwei Reißwalzen (6), die vor dem genannten Erntekanal (4) liegen und geeignet sind, die genannten in den genannten Erntekanälen (4) angeordnete Maispflanzen nach unten zu ziehen, so dass die genannten Kolben im Kontakt mit den genannten Pflückplatten (8) abgerissen und von den genannten Erntekanälen (4) befördert werden,
- wobei die nebeneinanderliegenden Erntegruppen (10) von den genannten Hauben (3) abgedeckt werden und mit den genannten Reihentrenner-Spitzen (2) verbunden sind,
- wobei der genannte Erntevorsatz (1) außerdem Häckslergruppen (7) umfasst, die geeignet sind, die genannten Maispflanzen zu schneiden, wenn sie in den genannten Erntekanälen (4) angeordnet sind,
- wobei jede der genannten Häckslergruppen (7) Folgendes umfasst:
- eine Nabe (70), die entlang einer nicht zur Horizontalebene parallelen Drehachse (70a) gedreht werden kann und unter einer der genannten Hauben (3) angeordnet ist,
- mindestens ein Drehmesser (71), das mit der genannten Nabe (70) verbunden und geeignet ist, die aufgrund seiner Länge aneinander angrenzend in zwei der genannten Erntekanäle (4) angeordneten genannten Maispflanzen zu scheiden,
- und wobei der genannte Erntevorsatz **dadurch gekennzeichnet ist, dass**:
- zwei der angrenzenden genannten Häckslergruppen (7) unter zwei nicht aneinander angrenzenden jeweiligen Hauben (3) angeordnet sind, so dass alle genannten Drehmesser (71) in derselben Ebene liegen können.

2. Erntevorsatz (1) nach dem vorangegangenen Anspruch, bei dem eine genannte Häckslergruppe (7) alle zwei Erntegruppen (10) vorhanden ist.

3. Erntevorsatz (1) nach Anspruch 1 oder 2, bei dem die genannten Drehmesser (61) in der Anzahl von jeweils zwei pro Nabe (70) vorhanden sind.

4. Erntevorsatz (1) nach einem oder mehreren der vorangegangenen Ansprüche, bei dem die genannten Drehmesser (71) eine Länge ausgehend von der Drehachse (70a) zwischen 3 dm und 6 dm aufweisen.

5. Erntevorsatz (1) nach dem vorangegangenen Anspruch, bei dem die genannten Drehmesser (71) jeweils eine Länge ausgehend von der Drehachse (70a) von 4 dm aufweisen.

6. Erntevorsatz (1) nach einem oder mehreren der vorangegangenen Ansprüche, bei dem die genannten Reißwalzen (6) Rückhaltemittel (61) umfassen, die geeignet sind, die Maispflanzen zurückzuhalten, um ihr Schneiden auch dann zu gestatten, wenn die genannten Drehmesser (71) eine mit der genannten Fahrtrichtung übereinstimmende Bewegungsrichtung aufweisen.

7. Erntevorsatz (1) nach dem vorangegangenen Anspruch, bei dem die genannten Rückhaltemittel (61) aus nicht zu der genannten Fahrtrichtung (1a) parallelen Nuten bestehen.

8. Erntevorsatz (1) nach dem vorangegangenen Anspruch, bei dem die genannten Rückhaltemittel (61) aus in radialer Richtung verlaufenden Lamellen bestehen, die geeignet sind, die Maispflanzen zurückzuhalten und dabei nicht zu schneiden.

9. Erntevorsatz (1) nach dem vorangegangenen Anspruch, bei dem jede der genannten Häckslergruppen (7) ein Kupplungsgelenk (72) umfasst.

10. Mähdrescher, umfassend einen Dreschflegel und einen Erntevorsatz (1) nach einem oder mehreren der vorangegangenen Ansprüche.

## Revendications

1. Tête de récolte (1) pour épi de maïs apte à moissonner des plantes de maïs le long d'une direction d'avancement (1a) et le long d'un sens d'avancement (1b) et comprenant :
- des pointes de division (2), aptes à acheminer lesdites plantes de maïs le long des canaux de récolte (4), s'étendant sensiblement dans la direction parallèle à ladite direction d'avancement (1a),
- des capots (3) reliés auxdites pointes de division (2) et définissant lesdits canaux de récolte (4) aptes à réaliser une zone de logement desdites plantes de maïs, quand elles ne sont pas encore coupées,
- une pluralité de groupes de récolte mis les uns à côté des autres, alignés et s'étendant principalement dans ladite direction d'avancement (1a), chacun desdits groupes de récolte (10) comprenant :
- des chaînes de récolte (5) aptes à transporter lesdites plantes de maïs et lesdits épis de maïs dans lesdits canaux de récolte (4) dans ladite direction d'avancement (1a) et dans un sens opposé par rapport audit sens d'avancement (1b),
- des plaques désépineuses (8) aptes à séparer lesdits épis de la tige et définissant une fente le long d'un des canaux de récolte (4),
- deux rouleaux d'extraction (6), se trouvant en face dudit canal de récolte (4), aptes à faire glisser lesdites plantes de maïs disposées dans ledit canal de récolte (4) vers le bas, de sorte que lesdits épis soient arrachés en contact avec lesdites plaques désépineuses (8) et transportés par lesdites chaînes de récolte (4),
- lesdits groupes de récolte (10) mis les uns à côté des autres étant surmontés desdits capots (3) et reliés auxdites pointes de division (2),
- ladite tête de récolte (1) comprenant en outre des groupes broyeurs de tiges (7) aptes à couper lesdites plantes de maïs quand elles sont disposées dans lesdits canaux de récolte (4),
- chacun desdits groupes broyeurs de tiges (7) comprenant :
- un moyeu (70), pivotable le long d'un axe de rotation (70a) qui est parallèle au plan horizontal disposé sous un desdits capots (3),
- au moins une lame pivotante (71), reliée audit moyeu (70) et apte à couper lesdites plantes de maïs, disposées dans deux desdits canaux de récolte (4) réciproquement contigus à cause de la longueur de celle-ci,
- et ladite tête de récolte **étant caractérisée en ce que** :
- deux desdits groupes broyeurs de tiges (7) adjacents sont disposés sous deux groupes respectifs (3) qui ne sont pas réciproquement adjacents de sorte que toutes lesdites lames pivotantes (71) puissent se poser sur le même plan.

2. Tête de récolte (1) selon la revendication précédente, dans laquelle il y a un desdits groupes broyeurs de tiges (7) tous les deux groupes de récolte (10).

3. Tête de récolte (1) selon la revendication 1 ou 2, dans laquelle il y a lesdites lames pivotantes (61) en nombre de deux pour chaque moyeu (70).

4. Tête de récolte (1) selon l'une ou plusieurs revendications précédentes, dans laquelle lesdites lames pivotantes (71) ont chacune une longueur, à partir de l'axe de rotation (70a), comprise entre 3 dm et 6 dm.

5. Tête de récolte (1) selon la revendication précédente, dans laquelle lesdites lames pivotantes (71) ont chacune une longueur, à partir de l'axe de rotation (70a), de 4 dm.

6. Tête de récolte (1) selon l'une ou plusieurs revendications précédentes, dans laquelle lesdits rouleaux d'extraction (6) comprennent des moyens de retenue (61), aptes à retenir les plantes de maïs de façon à permettre la coupe même lorsque lesdites lames pivotantes (71) ont un sens de mouvement qui coïncide avec ledit sens d'avancement.

7. Tête de récolte (1) selon la revendication précédente, dans laquelle lesdits moyens de retenue (61) sont des rainures qui ne sont pas parallèles à ladite direction d'avancement (1a).

8. Tête de récolte (1) selon la revendication précédente, dans laquelle lesdits moyens de retenue (61) sont des ailettes s'étendant dans la direction radiale et aptes à retenir et à ne pas couper les plantes de maïs.

9. Tête de récolte (1) selon la revendication précédente, dans laquelle chacun desdits groupes broyeurs de tiges (7) comprend un joint d'embranchement (72).

10. Moissonneuse-batteuse comprenant une batteuse et une tête de récolte (1) selon l'une ou plusieurs des revendications précédentes.
